# EUROPEAN PATENT APPLICATION

(11) **EP 3 693 443 A1**
(43) Date of publication of application: **12.08.2020**
(21) Application number: 19156211.5
(22) Date of filing: 08.02.2019
(51) Int. Cl.: C10G 3/00

(54) **PROCESS FOR THE PRODUCTION OF A HYDROCARBON PRODUCT**

(71) Applicant: Sca Forest Products AB, 851 88 Sundsvall (SE)
(72) Inventor: KUGGE, Christian, 862 32 Kvissleby (SE); KUMAR, Shushil, 907 32 Umeå (SE); KULYK, Kostiantyn, 3031 AM Rotterdam (NL)
(74) Representative: Weickmann & Weickmann PartmbB

(57) **Abstract**

The present invention relates to a process for producing a hydrocarbon product from a bio-oil comprising depolymerized lignin and a unit for producing a hydrocarbon product.

## Description

The present invention relates to a process for producing a hydrocarbon product from a bio-oil comprising depolymerized lignin and a unit for producing a hydrocarbon product.

Lignin is one of the two major components of lignocellulose in plants. Structurally it is a class of complex cross-linked phenolic polymers. From an energy point of view lignin has a high C/O ratio and accounts for a substantial proportion of carbon-based energy in lignocellulose. In the past however, lignin has only been considered as by-product of the pulp and paper industry. Only a minor amount of lignin produced by the pulp and paper industry was utilized commercially and the remainder was used as a low-value fuel. Recently, efforts have been made to recover lignin and convert it to bio-oil.

WO 2017/048163 and WO 2017/048164 describe processes for producing a bio-oil from lignin wherein a composition comprising kraft black liquor and an acidifying agent is treated in a reactor, optionally in the presence of H₂ and/or CO and optionally in the presence of a catalyst, thereby causing depolymerization of lignin in the black liquor composition and recovering a bio-oil comprising said depolymerized lignin.

WO 2017/078582 describes a process for producing a hydrocarbon product from a lignin oil wherein the lignin is treated in a reactor in the presence of a catalyst and in the presence of H₂ followed by cooling the reaction product from the reactor and fractionating the reaction product by phase separation into a gaseous phase, a liquid hydrocarbon product phase, and a water phase, thereby obtaining a hydrocarbon product.

There is, however, still a need to provide economically feasible methods for the production of a hydrocarbon product from a bio-oil comprising depolymerized lignin.

### Summary of the invention

The present invention provides a novel process for producing a hydrocarbon product from a bio-oil comprising depolymerized lignin as a starting material. The process has improved efficacy and/or economic feasibility compared to known processes. Further, the present invention provides a novel unit for producing a hydrocarbon product adapted for carrying out this novel process.

The present inventors have found that hydrotreatment of a bio-oil comprising depolymerized lignin in a hydrotreatment reactor is frequently associated with with catalyst poisoning due to the irreversible adsorption of metal ions as well as repolymerization of depolymerized lignin leading to coke formation. This deactivates the catalyst quickly and plugs the reactor.

This problem may be overcome by carrying out the hydrotreatment of depolymerized lignin in at least two steps. In one embodiment a first partial hydrotreatment is carried out in a first reactor comprising a guard bed and a second final hydrotreatment is carried out in a second reactor comprising a catalyst bed. In a further embodiment a first partial hydrotreatment and a subsequent second final hydrotreatment are carried out in a single reactor which comprises a first zone comprising a guard bed and a second zone comprising a catalyst bed. By this means, catalyst poisoning and undesired formation of coke can be avoided or at least reduced to a large extent.

A first aspect of the present invention relates to a process for producing a hydrocarbon product from a bio-oil comprising depolymerized lignin, comprising the steps of:
(a) providing a bio-oil comprising depolymerized lignin,
(b) passing a feed stream comprising the bio-oil from step (a) through a first reactor or first reactor zone in the presence of a gas, e.g. in the presence of a reducing gas such as H₂ and/or CO wherein the first reactor or first reactor zone comprises a guard bed comprising a first hydrotreatment catalyst and wherein the first reactor or first reactor zone is operated under conditions of elevated temperature and elevated pressure causing a partial hydrotreatment of the depolymerized lignin, wherein a partially hydrotreated bio-oil is obtained,
(c) passing a feed stream comprising a partially hydrotreated bio-oil from said first reactor or first reactor zone through a second reactor or second reactor zone in the presence of a gas, e.g. in the presence of a reducing gas such as H₂ and/or CO wherein the second reactor or second reactor zone comprises a catalyst bed comprising a second hydrotreatment catalyst and wherein the second reactor or second reactor zone is operated under conditions of elevated temperature and elevated pressure causing a hydrotreatment of the partially hydrotreated bio-oil feed, wherein an at least substantially hydrotreated hydrocarbon product is obtained and
(d) optionally further processing the at least substantially hydrotreated hydrocarbon product.

In an embodiment of the first aspect, the feed stream is passed through two separate reactors, namely a first reactor comprising a guard bed and a first hydrotreatment catalyst wherein a partially hydrotreated bio-oil is obtained, and a second reactor comprising a catalyst bed comprising a second hydrotreatment catalyst wherein a substantially hydrotreated hydrocarbon product is obtained. In a further embodiment of the first aspect, the feed stream is passed through two different zones of a single reactor, i.e. a first reactor zone comprising a guard bed and a first hydrotreatment catalyst, wherein a partially hydrotreated bio-oil is obtained and a second reactor zone comprising a catalyst bed and a second hydrotreatment catalyst wherein a substantially hydrotreated hydrocarbon product is obtained.

A second aspect of the present invention relates to a bio-oil comprising partially hydrotreated depolymerized lignin within the bio-oil obtainable after at least one passage through a first reactor or first reactor zone according to step (b) as described above. Further, the second aspect of the present invention relates to a process for producing a bio-oil comprising a partially hydrotreated depolymerized lignin comprising the steps of:
(a) providing a bio-oil comprising depolymerized lignin, and
(b) passing a feed stream comprising the bio-oil from step (a) through a first reactor or first reactor zone in the presence of a gas, e.g. in the presence of a reducing gas such as H₂ and/or CO wherein the first reactor or first reactor zone comprises a guard bed comprising a first hydrotreatment catalyst and wherein the first reactor or first reactor zone is operated under conditions of elevated temperature and elevated pressure causing a partial hydrotreatment of the depolymerized lignin, wherein a partially hydrotreated bio-oil is obtained,

A third aspect of the present invention relates to a hydrocarbon product obtainable by substantially complete hydrotreatment of depolymerized lignin in the bio-oil. This product is obtainable after at least one passage through a first reactor or first reactor zone according to step (b) as described above and a passage through a second reactor or second reactor zone according to step (c) as described above.

A fourth aspect of the present invention relates to a unit for producing a hydrocarbon product, comprising:
(a) optionally a container for providing a bio-oil comprising depolymerized lignin optionally including means for adding further components to the bio-oil,
(b) a first reactor comprising means for introducing a feed stream comprising a bio-oil comprising depolymerized lignin into the reactor, means for introducing a gas, e.g. a reducing gas such as H₂ and/or CO into the first reactor, a guard bed comprising a first hydrotreatment catalyst and means for removing a partially hydrotreated bio-oil from the reactor,
   wherein the first reactor is adapted for operating under conditions of elevated temperature and elevated pressure causing a partial hydrotreatment of the depolymerized lignin,
(c) a second reactor comprising means for introducing a feed stream comprising a partially hydrotreated bio-oil into the reactor, means for introducing a gas, e.g. a reducing gas such as H₂ and/or CO into the second reactor, a catalyst bed comprising a second hydrotreatment catalyst and means for removing an at least substantially hydrotreated hydrocarbon product from the reactor, wherein the second reactor is adapted for operating under conditions of elevated temperature and elevated pressure causing a substantially complete hydrotreatment of the partially hydrotreated bio-oil feed, and
(d) optionally means for further processing the at least substantially hydrotreated hydrocarbon product from the second reactor (c).

A fifth aspect of the present invention relates to a unit for producing a hydrocarbon product, comprising:
(a) optionally a container for providing a bio-oil comprising depolymerized lignin optionally including means for adding further components to the bio-oil,
(b) a reactor comprising a first reactor zone (bi) and a second reactor zone (bii),
   wherein the first reactor zone comprises means for introducing a feed stream comprising a bio-oil comprising depolymerized lignin into the first reactor zone, means for introducing a gas, e.g. a reducing gas such as H₂ and/or CO into the first reactor zone, a guard bed comprising a first hydrotreatment catalyst and means for removing a partially hydrotreated bio-oil from the first reactor zone,
   wherein the first reactor zone is adapted for operating under conditions of elevated temperature and elevated pressure causing a partial hydrotreatment of the depolymerized lignin,
   wherein the second reactor zone comprises means for introducing a feed stream comprising a partially hydrotreated bio-oil into the second reactor zone, means for introducing a gas, e.g. a reducing gas such as H₂ and/or CO into the second reactor zone, a catalyst bed comprising a second hydrotreatment catalyst and means for removing an at least substantially hydrotreated hydrocarbon product from the second reactor zone, wherein the second reactor zone is adapted for operating under conditions of elevated temperature and elevated pressure causing a substantially complete hydrotreatment of the partially hydrotreated bio-oil feed, and
(c) optionally means for further processing the at least substantially hydrotreated hydrocarbon product from the second reactor zone (bii).

### Detailed description

The present invention relates to the production of a hydrocarbon product from a bio-oil comprising depolymerized lignin. According to step (a) of the process a starting material is provided which is a bio-oil comprising depolymerized lignin. The depolymerized lignin may be selected from any type of suitable depolymerized lignin, e.g. depolymerized kraft lignin, depolymerized LignoBoost lignin, depolymerized lignosulfonate lignin, depolymerized hydrolysis lignin, depolymerized organosolv lignin, and depolymerized sulfur-free lignin. The lignin may be depolymerized by known procedures such as base catalysis, acid catalysis, pyrolysis including fast pyrolysis, hydrothermal liquefaction, treatment with subcritical or supercritical fluids such as water, acetone, CO₂, methanol, ethanol or combinations thereof.

The depolymerized lignin has an average molecular weight which is substantially reduced compared to the average molecular weight of lignin. In certain embodiments, the weight average molecular weight of the depolymerized lignin may be in the range of about 200 to about 2000 g/mol, e.g. about 250 to about 1000 g/mol, particularly about 300 to about 800 g/mol. Further, the depolymerized lignin may have an oxygen content of about 5 to about 35 wt-% or of about 10 to 25 wt-% based on the total weight of the depolymerized lignin.

The lignin source used for obtaining the depolymerized lignin is preferably kraft black liquor. Depolymerized lignin from kraft black liquor may be obtained by base catalysis, e.g. by procedures as described in WO 2017/048163 or WO 2017/048164. The contents of these documents are herein incorporated by reference.

The depolymerized lignin is subjected to a hydrotreatment procedure under conditions of elevated pressure and temperature in the presence of a gas such as H₂, CO, CO₂, N₂, NH₃, H₂S, moist syngas, mercaptans such as methanethiol, dimethylsulfide, dimethyldisulfide, SO₂, methane, ethane, propane, butane and any mixture thereof, particularly in the presence of a reducing gas such as H₂ and/or CO. The hydrotreatment procedure comprises deoxygenation, i.e. reduction of the oxygen content in the depolymerized lignin and/or desulfurization, i.e. reduction of the sulfur content in the depolymerized lignin and/or denitrogenation, i.e. reduction of the nitrogen content in the depolymerized lignin and/or cracking, i.e. breaking down of complex organic molecules into simpler molecules.

According to an embodiment of the present invention, the hydrotreatment is carried out by passing the depolymerized lignin through at least two different reactors, i.e. at least one first reactor and a second reactor. The at least one first reactor is a *"guard bed reactor"* which is operated under "*mild*" hydrotreatment conditions resulting in a partial hydrotreatment of the depolymerized lignin, particularly in a partial, but incomplete removal of oxygen and sulfur from the depolymerized lignin. The second reactor is a catalyst bed reactor which is operated under *"harsh"* conditions resulting in a substantially complete hydrotreatment, particularly in a substantially complete removal of oxygen and sulfur from the depolymerized lignin.

According to a further embodiment of the present invention, the hydrotreatment is carried out by passing the depolymerized lignin through a single reactor comprising at least two different reactor zones, i.e. at least one first reactor zone and a second reactor zone. The at least one first reactor zone is a "*guard bed reactor zone*" which is operated under "*mild*" hydrotreatment conditions resulting in a partial hydrotreatment of the depolymerized lignin, particularly in a partial but incomplete removal of oxygen and sulfur from the depolymerized lignin. The second reactor zone is a catalyst bed reactor zone which is operated under *"harsh"* conditions resulting in a substantially complete hydrotreatment, particularly in a substantially complete removal of oxygen and sulfur from the depolymerized lignin.

The bio-oil composition provided in step (a) of the present invention comprises depolymerized lignin, particularly in an amount of at least 10 wt-%, at least 30 wt-% or at least 50 wt-% based on the total weight of the composition.

If desired, the bio-oil may contain a further lignin-derived component, e.g. a partially hydrotreated, e.g. partially deoxygenated, desulfurized and denitrogenated bio-oil. This partially hydrotreated component may be obtained by subjecting depolymerized lignin to a partial hydrotreatment as described therein infra and recycling back the partially hydrotreated depolymerized lignin to step (a). The partially hydrotreated depolymerized lignin is characterized by a reduced oxygen and/or sulfur content compared to depolymerized and non-hydrotreated lignin oil. For example, the reduction in the oxygen weight content of the partially hydrotreated depolymerized lignin compared to non-hydrotreated depolymerized lignin may be from about 5% to about 50%, e.g. about 10% to about 30% based on the relative oxygen weight content of depolymerized and non-hydrotreated lignin present in the composition provided according to step (a). Further, the partially hydrotreated depolymerized lignin may be characterized by a reduced sulfur content compared to depolymerized and non-hydrotreated lignin oil. For example, the sulfur content in the partially hydrotreated depolymerized lignin is 0.2 wt% or less, or about 0.01 to about 0.1 wt% whereas depolymerized and non-hydrotreated lignin oil may have a sulfur content of about 1 wt%. Furthermore, the partially hydrotreated depolymerized lignin may be characterized by a reduced content of metal catalyst poisons such as sodium and/or potassium ions. For example, the content of sodium in the partially hydrotreated depolymerized lignin may be about 30 ppm or less, e.g. about 1 ppm to about 20 ppm or less and/or the content of potassium may be about 20 ppm or less, e.g. about 1 ppm to about 15 ppm.

In certain embodiments, a partially hydrotreated depolymerized lignin may be present in the composition in an amount of up to about 50 wt-%, up to about 70 wt-% or up to about to about 80 wt-% or up to about 99 wt-% based on the total weight of the composition, i.e. the bio-oil provided in step (a).

If desired, at least one non-lignin derived component may be present in the bio-oil provided in step (a) of the process. This further component may be an organic non-lignin derived diluent, e.g. selected from ethyl acetate, glycerol, benzyl alcohol, cresol, terpineol including isomers thereof or any combination thereof. In certain embodiments, an organic non-lignin derived diluent may be present in the composition in an amount of up to 20 wt-%, up to 70 wt-% or up to 80 wt-% based on the total weight of the bio-oil provided in step (a).

Further, the bio-oil provided in step (a) may comprise a rosin-containing oil such as tall oil or rosin constituents thereof, e.g. resin acids, such as abietic acid and/or pimaric acid, including crude tall oil and fractions of crude tall oil such as tall oil pitch, tall oil rosin or tall oil fatty acids. In certain embodiments, a rosin-containing oil may be present in the composition in an amount of up to 20 wt-%, up to 70 wt-% or up to 80 wt-% based on the total weight of the bio-oil provided in step (a).

According to step (b) of the process of the invention, a feed stream of the bio-oil provided in step (a) is passed through a first reactor or first reactor zone in the presence of a gas as described above, e.g. a reducing gas such as H₂ and/or CO, or a H₂ and/or CO containing gas mixture. The first reactor or first reactor zone is a guard bed reactor or guard bed reactor zone having a guard bed comprising a first hydrotreatment catalyst. The guard bed may be a fixed bed comprising a supported catalyst, i.e. a catalyst bound to a support. Alternatively, the guard bed may be a fluidized bed comprising unsupported free catalyst particles.

The guard bed reactor or guard bed reactor zone is operated under conditions of elevated temperature and elevanted pressure, particularly under "*mild*" temperature/pressure/catalyst conditions thereby causing a partial hydrotreatment of the depolymerized lignin wherein a partially hydrotreated bio-oil is obtained. The term "elevated temperature" relates to a temperature which is elevated compared to room temperature and the term "elevated pressure" relates to a pressure which is elevated compared to atmospheric pressure. For example, the guard bed reactor or reactor zone may be operated at a temperature between about 120°C to about 300°C, particularly between about 150°C to about 280°C at a suitable gas pressure, e.g. H₂ and/or CO pressure which may be about 30 bar to about 160 bar, particularly about 50 bar to about 150 bar. Further, the guard bed reactor or reactor zone may be operated at a gas/oil ratio of about 200 to about 2,000 I/I, particularly of about 500 I/I to about 1,500 I/I.

The guard bed of the first reactor or first reactor zone comprises a a first hydrotreatment catalyst selected from metal catalysts, metal oxide catalysts, metal nitride catalysts or mixed metal/mixed metal oxide catalysts such as NiMo, CoMo, NiO, Ni/NiO, Ni/P, Ni₃N, Cu/Cr, Pd/Cu, Pt, Ru or Ti. The hydrotreatment catalyst in the guard bed is selected as providing a low activity per volume unit and/or a low content of active sites per volume unit in order to avoid undesired complete hydrotreatment. For this purpose a catalyst having low activity *per se* and/or a catalyst having a low content of active sites per volume unit may be selected. For example, the first hydrotreatment catalyst in the guard bed may have a content of active components of about 0.5 to about 30 wt% or of about 1 to about 15 wt% of catalyst.

The catalyst may be bound to a support. The support may be in particulate form, e.g. having a particle size of about 1 to about 10 mm. For example, the support may be in form of extrudate particles having a length of about 3 to about 5 mm. The support can be selected from material having 0 wt% active component, e.g. a metal oxide based support such as alumina, chromite or zirconia, a silicon oxide-based support such as silica or zeolite or a carbon-based support such as carbon or graphite or a combination thereof.

Further, the guard bed may comprise an inert filler material such as SiC and/or γ-alumina.

In a particular embodiment, the first reactor or first reactor zone comprises a guard bed comprising an alumina support and a NiMo hydrotreatment catalyst which may have a low content of active components of about 0.5 to about 30 wt% or of about 1 to about 15 wt% of catalyst.

The guard bed may comprise a single section or several different sections, e.g. a first section comprised of an inert filling material and a second section comprising the guard bed with the first hydrotreatment catalyst bound to the support.

In certain embodiments, the guard bed is a trickle bed using a downward movement of the feed over a packed reactor bed. In this embodiment, typically, a feed of bio-oil and a reducing gas are introduced at the top of the reactor or reactor zone and move downwards through the guard bed. The products exit from the bottom of the reactor or reactor zone.

The depolymerized lignin is subjected to a partial, but incomplete hydrotreatment in the first guard bed reactor or reactor zone whereby a partially hydrotreated bio-oil is obtained which may be an intermediate product in the production of bio-fuels or which may be a starting material for the production of organic compounds. The depolymerized lignin in the product after step (b) is characterized by a reduced oxygen weight content compared to the oxygen weight content of the depolymerized lignin before step (b). For example, the reduction in the oxygen weight content may be from about 5% to about 50%, e.g. about 10% based on the relative oxygen weight content of the bio-oil before step (b).

The process of the present invention comprises several embodiments with regard to the partially hydrotreated product which is obtained after passage through a first guard bed reactor or guard bed reactor zone according to step (b).

In an embodiment wherein separate first and second reactors are used, , the bio-oil feed may be passed once through a first reactor in step (b). In a second embodiment, the bio-oil feed is passed several times, e.g. two, three or four times through a first reactor each passage effecting a partial hydrotreatment involving a reduction in the oxygen weight content of the depolymerized lignin as described above. For example, a bio-oil feed may be passed two, three or four times through a first reactor. In such a case, each first reactor may be the same reactor or a different reactor for each passage. In certain embodiments, a plurality of different first reactors may be used which are operated at different conditions, in particular, at different conditions of temperature and/or pressure and/or catalyst type and/or content. In certain embodiments, conditions of increasing "*harshness*", e.g. an increasing temperature, are selected for each subsequent passage.

In an embodiment, wherein a single reactor comprising different first and second reactor zones is used, a plurality of different first reactor zones may be present which are operated at different conditions, in particular, at least different conditions of temperature and/or pressure and/or catalyst type and/or content. In certain embodiments, conditions of increasing "*harshness*", e.g. an increasing temperature, are selected for each subsequent zone.

The resulting partially hydrotreated product obtained from a single passage or a plurality of passages through a guard bed reactor or guard bed reactor zone according to step (b) may be directly subjected to a complete hydrotreatment in the second reactor or second reactor zone according to step (c) of the process of the invention. Alternatively, the partially hydrotreated product or at least a portion thereof may be recycled to a previous process stage, for example, back to step (a) of the process as a diluent of the depolymerized non-hydrotreated lignin.

In a still further embodiment, at least a portion of the partially hydrotreated product obtained from at least one passage through a first reactor or reactor zone according to step (b) is recycled further back into a process for depolymerizing lignin, particularly in a process for depolymerizing lignin from a kraft black liquor composition. In this embodiment, the partially hydrotreated depolymerized lignin may be used as a capping agent, defoaming agent, diluent, solvent, e.g. extracting solvent, lubricant, viscosity reducing agent and/or compatibilizer in any step of a lignin depolymerization process, particularly in a process of separating a bio-oil comprising depolymerized lignin and black liquor constituents. For example, the partially hydrotreated bio-oil e product may be added to an alkaline black liquor composition which has already been subjected to a lignin depolymerization in a suitable lignin depolymerization reactor, e.g. as described in WO 2017/048163 and WO 2017/048164. In this embodiment, the partially hydrotreated product may be added before, during and/or after adding an acidifying agent to the alkaline composition for pH adjustment, e.g. to a pH of about 8 or less.

In certain embodiments, water can be removed from the partially hydrotreated product obtained from a passage through a guard bed reactor or guard bed reactor zone according to step (b), particularly before the partially hydrotreated product is subjected to a passage through a catalyst bed reactor or catalyst bed reactor zone according to step (c). For example, at least about 20 weight-%, at least about 40 weight-% or at least about 80 weight-% of the water is removed. Removal of water is beneficial for the final hydrotreatment step (c), particularly in the presence of a gas or gas mixture comprising H₂.

According to step (c) of the process of the invention a feed stream comprising a partially hydrotreated bio-oil product from a first reactor or first reactor zone is passed through a second reactor or second reactor zone in the presence of a gas as described above, e.g. a reducing gas such as H₂ and/or CO or a H₂ and/or CO containing gas mixture. The second reactor or catalyst bed reactor zone is a catalyst bed reactor or catalyst bed reactor zone having a catalyst bed comprising a second hydrotreatment catalyst. The catalyst bed may be a fixed bed comprising a supported catalyst, i.e. a catalyst bound to a support. Alternatively, the catalyst bed may be a fluidized bed comprising unsupported free catalyst particles.

The catalyst bed reactor or catalyst bed reactor zone is operated under conditions of elevated temperature and elevated pressure, particularly under *"harsh"* temperature/pressure/catalyst conditions thereby causing a substantially complete hydrotreatment of the partially hydrotreated bio-oil feed wherein a hydrocarbon product is obtained. The term "elevated temperature" relates to a temperature which is elevated compared to room temperature and the term "elevated pressure" relates to a pressure which is elevated compared to atmospheric pressure. For example, the catalyst bed reactor or reactor zone may be operated at a temperature between about 290°C to about 400°C, particularly between about 300°C to about 330°C at a suitable gas pressure, e.g. H₂ and/or CO pressure which may be about 30 bar to about 160 bar, particularly about 50 bar to about 150 bar. Further, the catalyst bed reactor or reactor zone may be operated at a gas/oil ratio of about 200 I/I to about 2,000 I/I, particularly of about 500 I/I to about 1,500 I/I.

The catalyst bed of the second reactor or second reactor zone comprises a second hydrotreatment catalyst. The second hydrotreatment catalyst may be the same or different as the first hydrotreatment catalyst in the guard bed reactor or reactor zone and may be selected from metal catalysts, metal oxide catalysts, metal nitride catalysts or mixed metal/mixed metal oxide catalysts such as NiMo, CoMo, NiO, Ni/NiO, Ni/P, Ni₃N, Cu/Cr, Pd/Cu, Pt, Ru or Ti. The hydrotreatment catalyst in the catalyst bed is selected as providing a high activity per volume unit and/or a high content of active sites per volume unit in order to achieve a substantially complete hydrotreatment. For this purpose a catalyst having a high activity *per se* and/or a catalyst having a high content of active sites per volume unit may be selected. For example, the second hydrotreatment catalyst in the catalyst bed reactor may have a content of active sites of about 1 to about 50 wt% or about 10 to about 30 wt% of catalyst.

The catalyst may be bound to a support which may be in particulate form, e.g as described above.The support which may be selected from a metal oxide-based support such as alumina, chromite or zirconia,silica or zeolite or a carbon-based support such as carbon or graphite or a combination thereof.

Further, the catalyst may comprise an inert filling material such as SiC and/or γ-alumina.

In a particular embodiment, the second reactor or second reactor zone comprises a catalyst bed comprising an alumina support comprising a NiMo hydrotreatment catalyst which may have a high content of active sites of about 1 to about 50 wt% or of about 10 to about 30 wt% of catalyst.

The catalyst bed may comprise a single section or several different sections, e.g. a first section comprised of an inert filling material and a second section comprising the catalyst bed with the second hydrotreatment catalyst bound to the support.

In certain embodiments, the catalyst bed is a trickle bed using a downward movement of the feed over a packed catalyst bed. Typically, a feed of partially hydrotreated bio-oil and a reducing gas are introduced at the top of the reactor or reactor zone and move downwards through the catalyst bed. The products exit from the bottom of the reactor or reactor zone.

According to step (c), a partially hydrotreated depolymerized lignin is subjected to a substantially complete hydrotreatment in a catalyst bed reactor or reactor zone. Thereby, the partially hydrotreated depolymerized lignin after step (b) is converted to a hydrocarbon product after step (c) which may be characterized by an oxygen weight content of about 2 wt-% or less or about 1 wt-% or less and/or a sulfur weight content of about 10 to about 50 ppm or about 20 to about 30 ppm based on the total weight of the hydrocarbon product after removal of gaseous products (at atmospheric pressure) and aqueous products. The hydrocarbon product may be comprised of linear or cyclic hydrocarbons which may be completely or non-completely saturated, unsaturated or aromatic. Typically, the hydrocarbon product comprises hydrocarbons having about 6 to about 22 C atoms such as C6 - cyclohexane, C19 - tricyclohexylmethane, C21 - tricyclohexylpropane, etc.

The effluent leaving the second reactor or reactor zone may be cooled by a heat exchanger to e.g. 25°C to 30°C subjected to a further processing according to step (d), e.g. by means of a phase separation wherein the effluent is separated into a gaseous phase, a liquid hydrocarbon product phase and an aqueous phase. The gaseous phase may comprise non-reacted H₂, reaction gases such as H₂S, CO and CO₂ as well as very light hydrocarbons. These gaseous products may be lead to a steam reformer producing H₂ and CO or CO₂ wherein H₂ and CO are optionally recycled to the process. Another option is to recycle both H₂ and the remaining gaseous products such as CO and CH₄ which may serve as H₂-containing reducing gas mixture. The aqueous phase is a result from the hydrodeoxygenation of the lignin oil and can be recycled to a kraft mill.

The liquid hydrocarbon product phase comprises hydrocarbons with a wide range of boiling points. Thus, the hydrocarbons may be distilled to obtain several fractions of different boiling point ranges. For example, the hydrocarbon product may be separated into three fractions by means of distillation, wherein a first fraction of light hydrocarbons comprising hydrocarbons having a boiling of 35°C to 180°C, a second fraction of heavy hydrocarbons comprising hydrocarbons having a boiling point of 181°C to 340°C and a third fraction of very heavy hydrocarbons comprising hydrocarbons having a boiling above 340°C is obtained.

The liquid hydrocarbon product may serve as fuel, e.g. as jet fuel, gasoline or diesel. Another possible use of the hydrocarbons is for the synthesis of chemicals for the non-fuel market.

In a particular embodiment, the process of the invention as described above is operated continuously.

The second aspect of the present invention relates to the partially hydrotreated product which is a partially hydrotreated depolymerized lignin obtainable after at least one passage through a first reactor according to step (b). This product is characterized by weight average molecular weight which is substantially reduced compared to the weight average molecular weight of lignin and optionally to the weight average molecular weight of depolymerized lignin indicated above. In certain embodiments, the weight average molecular weight of the partially hydrotreated product may be in the range of 100 to about 2000 g/mol. Further, the product may have an oxygen content of about 5 wt-% to about 25 wt-% based on the total weight of the product and/or a sulfur content of about 0.2 wt% or less or of about 0.01 wt% to about 0.1 wt%.

Further, the second aspect of the present invention relates to a process of producing a partially hydrotreated depolymerized lignin product as described above.

The partially hydrotreated product can be used as a capping agent, defoaming agent, diluent, solvent, e.g. extracting solvent, lubricant, viscosity reducing agent and/or compatibilizer in any step of a lignin depolymerization process, particularly in a process of separating a bio-oil comprising depolymerized lignin and black liquor constituents.

The third aspect of the present invention relates to a hydrocarbon product which is a substantially completely hydrotreated depolymerized lignin obtainable after at least one passage through a first reactor according to step (b) as described and a passage through a second reactor according to step (c) as described. The hydrocarbon product is particularly characterized by an oxygen weight content of about 2 wt-% or less or about 1 wt-% or less and/or a sulfur weight content of about 10 ppm to about 50 ppm or about 20 ppm to about 30 ppm.

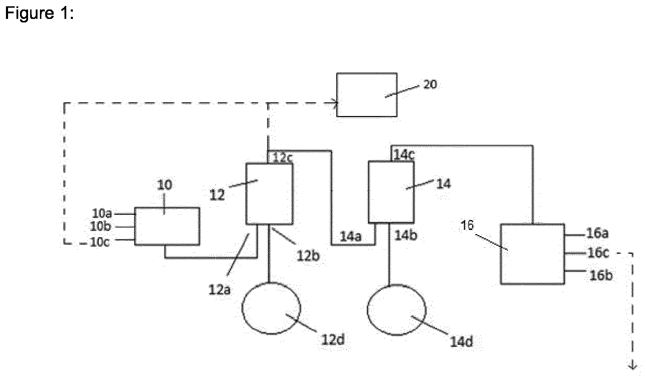

The fourth aspect of the invention relates to a unit for producing a hydrocarbon product from a bio-oil. A particular embodiment of such a unit is schematically depicted in Figure 1.

The unit comprises a container (10) for providing a bio-oil composition comprising depolymerized lignin. The container (10) may be formed as a mixing tank having several inlets (10a, 10b, 10c) for introducing the bio-oil composition and further components. The bio-oil composition is passed from container (10) to a first hydrotreatment reactor (12) which is operated under "*mild*" conditions of temperature and catalyst thereby obtaining a partially hydrotreated intermediate product. The reactor (12) comprises an inlet (12a) for introducing the bio-oil composition and an inlet (12b) for introducing a gas as described above, e.g. a reducing gas such as H₂ and/or CO under pressure, e.g. from a tank (12d) into the lower portion, particularly into the reactor bottom and an outlet (12c) for removing the partially hydrotreated intermediate product from an upper reactor portion, particularly from the top of the reactor.

The partially hydrotreated intermediate product may be then transferred from the first reactor (12) to a second reactor (14) which is operated under *"harsh"* conditions of temperature and catalyst thereby obtaining a completely hydrotreated hydrocarbon product. The second reactor (14) comprises an inlet (14a) for introducing the intermediate product and an inlet (14b) for introducing a gas as described above, e.g. a reducing gas such as H₂ and/or CO, e.g. from a tank (14d) under pressure into the lower reactor portion, particularly into the reactor bottom and an outlet (14c) for removing the hydrotreated composition from an upper reactor portion, particularly from the top of the reactor.

The composition is then transferred from, the second reactor (14) to a phase separator (16) whereby the composition is subjected to a phase separation. A gaseous phase is removed via outlet (16a) and an aqueous phase via outlet (16b). The liquid hydrocarbon product phase is removed via outlet (16c).

The liquid hydrocarbon product may be subjected to further processing, e.g. fractionation by distillation (not shown).

The unit may be further adapted for recycling of at least an portion of the partially hydrotreated intermediate product from the first reactor (12) to the container (10), e.g. via inlet (10c) and/or to a process of depolymerizing lignin generally referred to as (20).

The fifth aspect of the invention also relates to a unit for producing a hydrocarbon product from a bio-oil which comprises a single reactor having at least one first reactor zone and a second reactor zone as described above.

The present invention is further defined by the following embodiments which are part of the specification.
1. A process for producing a hydrocarbon product from a bio-oil comprising depolymerized lignin, comprising the steps of:
   (a) providing a bio-oil comprising depolymerized lignin,
   (b) passing a feed stream comprising the bio-oil from step (a) through a first reactor or a first reactor zone in the presence of a gas, e.g a reducing gas such as H₂ and/or CO wherein the first reactor or first reactor zone comprises a guard bed comprising a first hydrotreatment catalyst and wherein the first reactor or first reactor zone is operated under conditions of elevated temperature and elevated pressure causing a partial hydrotreatment of the depolymerized lignin, wherein a partially hydrotreated bio-oil is obtained,
   (c) passing a feed stream comprising a partially hydrotreated bio-oil from said first reactor or first reactor zone through a second reactor or second reactor zone in the presence of a gas, e.g. a reducing gas such as H₂ and/or CO wherein the second reactor or second reactor zone comprises a catalyst bed comprising a second hydrotreatment catalyst and wherein the second reactor or second reactor zone is operated under conditions of elevated temperature and elevated pressure causing a hydrotreatment of the partially hydrotreated bio-oil feed, wherein an at least substantially hydrotreated hydrocarbon product is obtained and
   (d) optionally further processing the at least substantially hydrotreated hydrocarbon product.
2. The process of embodiment 1,
   wherein the bio-oil from step (a) comprises an amount of at least 10 wt-%, at least 30% wt-% or at least 50 wt-% depolymerized lignin.
3. The process of embodiment 1 or 2,
   wherein the depolymerized lignin in the bio-oil provided in step (a) has a weight average molecular weight of about 200 to about 2,000 g/mol, particularly 250 to about 1,000 g/mol, more particularly of about 300 to about 800 g/mol.
4. The process of any one of the preceding embodiments,
   wherein the depolymerized lignin in the bio-oil provided in step (a) has an oxygen weight content of about 5 to about 35 wt-% based on the total weight of the depolymerized lignin.
5. The process of any one of the preceding embodiments,
   wherein the bio-oil provided in step (a) further comprises an organic diluent, e.g. selected from ethyl acetate, glycerol, benzyl alcohol, cresol, terpineol including isomers thereof, or any combination thereof, particularly in an amount of up to about 20 wt-%, up to about 70 wt-%, or up to about 80 wt-% based on the total weight of the composition.
6. The process of any one of the preceding embodiments,
   wherein the bio-oil provided in step (a) further comprises a rosin-containing oil such as tall oil, including crude tall oil, or a fraction thereof, particularly in an amount of up to about 20 wt-%, up to about 70 wt-%, or up to about 80 wt-% based on the total weight of the composition.
7. The process of any one of the preceding embodiments,
   wherein the bio-oil provided in step (a) further comprises a depolymerized and partially hydrotreated lignin oil, particularly in an amount of up to about 20 wt-%, up to about 70 wt-% or up to about 80 wt-% based on the total weight of the composition.
8. The process of any one of the preceding embodiments,
   wherein the first reactor or first reactor zone is operated at a temperature between about 120°C to about 300°C, particularly between about 150°C to about 280°C, a pressure, e.g. a H₂ and/or CO pressure of about 30 bar to about 160 bar, particularly of about 50 bar to about 150 bar, and/or a gas/oil ratio of about 200 to about 2,000 I/I, particularly of about 500 to about 1,500 I/I.
9. The process of any one of the preceding embodiments,
   wherein the first reactor or first reactor zone comprises a first hydrotreatment catalyst selected from metal catalysts, metal oxide catalysts, metal nitride catalysts or mixed metal/metal oxide catalysts such as NiMo, CoMo, NiO, Ni/NiO, Ni/P, Ni₃N, Cu/Cr, Pd/Cu, Pt, Ru, Ti or a combination thereof.
10. The process of embodiment 9,
   wherein the first hydrotreatment catalyst has a content of active components of about 0.5 to about 30 wt% or 1 to about 15 wt-% of catalyst.
11. The process of any one of the preceding embodiments,
   wherein the first hydrotreatment catalyst is bound to a support, particularly selected from alumina, zeolite, chromite, zirconia, carbon, graphite, silica, or a combination thereof.
12. The process of any one of embodiments 9-11,
   wherein the first reactor or first reactor zone comprises a guard bed comprising an alumina support and a NiMo hydrotreatment catalyst.
13. The process of any one of the preceding embodiments,
   wherein the depolymerized lignin in the partially hydrotreated bio-oil after step (b) is characterized by a reduced oxygen weight content compared to the oxygen weight content before step (b), wherein the reduction in the oxygen weight content is particularly from about 5% to about 50%, e.g. about 10% based on the relative oxygen weight content before step (b).
14. The process of any one of the preceding embodiments,
   wherein the second reactor or second reactor zone is operated at a temperature between about 290°C to about 400°C, particularly between about 300°C to about 330°C, a pressure, e.g. a H₂ and/or CO pressure of about 30 bar to about 160 bar, particularly about 50 bar to about 150 bar, and/or a gas/oil ratio of about 200 to about 2,000 I/I, particularly of about 500 to about 1,500 I/I.
15. The process of any one of the preceding embodiments,
   wherein the second reactor or second reactor zone comprises a second hydrotreatment catalyst selected from metal catalysts, metal oxide catalysts or mixed metal/metal oxide catalysts such as NiMo, CoMo, NiO, Ni/NiO, Cu/Cr, Pd/Cu, Pt, or a combination thereof.
16. The process of embodiment 15,
   wherein the second hydrotreatment catalyst has a content of active sites of about 1 to about 50 wt% or about 10 to about 30 wt-% of catalyst.
17. The process of any one of the preceding embodiments,
   wherein the second hydrotreatment catalyst is bound to a support, particularly selected from alumina, zeolite, chromite, zirconia, carbon, graphite, silica or a combination thereof.
18. The process of any one of the preceding embodiments, wherein the catalyst bed of the second reactor or second reactor zone comprises a support having a hydrophobic surface.
19. The process of any one of embodiments 14-16,
   wherein the second reactor or second reactor zone comprises a catalyst bed comprising an alumina support and a NiMo hydrotreatment catalyst.
20. The process of any one of the preceding embodiments,
   wherein the hydrocarbon product obtained after step (c) and optionally after further processing step (d) is characterized by an oxygen weight content of about 2 weight-% or less or about 1 weight-% or less and/or a sulfur weight content of about 10 to about 50 ppm or about 20 to about 30 ppm.
21. The process of any one of the preceding embodiments,
   wherein the further processing in step (d) comprises a phase separation wherein the product obtained after step (c) is separated into a gaseous phase, a liquid hydrocarbon product phase and an aqueous phase.
22. The process of embodiment 21,
   wherein the liquid hydrocarbon product is subjected to a fractionation after phase separation.
23. The process of any one of the preceding embodiments wherein step (b) comprises passing the stream through a first reactor and step (c) comprises passing the feed stream through a second reactor which is separate from the first reactor.
24. The process of any one of embodiments 1-22 wherein step (b) comprises passing the stream through a first reactor zone and step (c) comprises passing the feed stream through a second reactor zone wherein the first reactor zone and the second reactor zone are present in a single reactor.
25. The process of any one of the preceding embodiments,
   wherein in step (b) the bio-oil feed is passed once through a first reactor or first reactor zone.
26. The process of any one of embodiments 1-24,
   wherein in step (b) the bio-oil feed is passed several times, e.g. 2, 3 or 4 times through a first reactor or first reactor zone, optionally at different conditions, e.g. at increasing temperature conditions.
27. The process of any one of the preceding embodiments,
   wherein at least a portion of the partially hydrotreated bio-oil obtained from a passage through a first reactor or first reactor zone is recycled back to step (a) of the process.
28. The process of any one of the preceding embodiments,
   wherein at least a portion of the partially hydrotreated bio-oil obtained from a passage through a first reactor or reactor zone according to step (b) is recycled back to a process for depolymerizing lignin.
29. The process of embodiment 28,
   wherein the partially hydrotreated bio-oil is added to a composition obtained from a lignin-depolymerization reactor before, during and/or after adding an acidifying agent for pH adjustment, e.g. to a pH of about 8 or less.
30. The process of any one of the preceding embodiments, which is operated continuously.
31.A partially hydrotreated depolymerized lignin,
   characterized by an oxygen weight content of about 5 to about 30 weight-% based on the total weight.
32. The partially hydrotreated depolymerized lignin of claim 31, obtainable after at least one passage through a first reactor or reactor zone according to step (b) of embodiment 1.
33. A hydrocarbon product, obtainable by hydrotreatment of depolymerized lignin,
   characterized by an oxygen weight content of about 2 wt-% or less and a sulfur weight content of about 10 to about 50 ppm.
34. The hydrocarbon product of embodiment 33, obtainable after a passage through at least a second reactor or reactor zone according to step (c) of embodiment 1.
35. Use of a partially hydrotreated depolymerized lignin according to embodiment 31 or 32, as a capping agent, defoaming agent, diluent, solvent, e.g. extracting solvent and/or lubricant, viscosity reducing agent and/or compatibilizer in a process for depolymerizing lignin, particularly in a process for the separation of bio-oil and black liquor constituents.
36. A unit for producing a hydrocarbon product comprising:
   (a) optionally a container for providing a bio-oil comprising depolymerized lignin optionally including means for adding further components to the bio-oil,
   (b) a first reactor comprising means for introducing a feed stream comprising a bio-oil comprising depolymerized lignin into the reactor, means for introducing a reducing gas such as H₂ and/or CO into the reactor, a guard bed comprising a first hydrotreatment catalyst and means for removing a partially hydrotreated bio-oil from the reactor,
      wherein the first reactor is adapted for operating under conditions of elevated temperature and elevated pressure causing a partial hydrotreatment of the depolymerized lignin,
   (c) a second reactor comprising means for introducing a feed stream comprising a partially hydrotreated bio-oil into the reactor, means for introducing a reducing gas such as H₂ and/or CO into the reactor, a catalyst bed comprising a second hydrotreatment catalyst and means for removing an at least substantially hydrotreated hydrocarbon product from the reactor,
      wherein the second reactor is adapted for operating under conditions of elevated temperature and elevated pressure causing a hydrotreatment of the partially hydrotreated bio-oil feed, and
   (d) optionally means for further processing the at least substantially partially hydrotreated hydrocarbon product from the second reactor (c).
37. The unit of embodiment 36,
   wherein means (d) comprises a phase separator, and/or a fractionation device.
38. The unit of embodiment 36 or 37,
   further comprising means for passing a feed stream comprising depolymerized lignin several times through a first reactor (b).
39. The unit of any one of embodiments 36-38,
   further comprising means for recycling a fraction of partially hydrotreated bio-oil from a first reactor (b) to a container (a) and/or to a process for depolymerizing lignin.
40. A unit for producing a hydrocarbon product comprising:
   (a) optionally a container for providing a bio-oil comprising depolymerized lignin optionally including means for adding further components to the bio-oil,
   (b) a reactor comprising a first reactor zone (bi) and a second reactor zone (bii),
      wherein the first reactor zone (bi) comprises means for introducing a feed stream comprising a bio-oil comprising depolymerized lignin into the first reactor zone, means for introducing a gas, e.g. a reducing gas such as H₂ and/or CO into the first reactor zone, a guard bed comprising a first hydrotreatment catalyst and means for removing a partially hydrotreated bio-oil from the first reactor zone (bi),
      wherein the first reactor zone is adapted for operating under conditions of elevated temperature and elevated pressure causing a partial hydrotreatment of the depolymerized lignin,
      wherein the second reactor zone (bii) comprises means for introducing a feed stream comprising a partially hydrotreated bio-oil into the second reactor zone, means for introducing a gas, e.g. a reducing gas such as H₂ and/or CO into the second reactor zone, a catalyst bed comprising a second hydrotreatment catalyst and means for removing an at least substantially hydrotreated hydrocarbon product from the second reactor zone, wherein the second reactor zone is adapted for operating under conditions of elevated temperature and elevated pressure causing a substantially complete hydrotreatment of the partially hydrotreated bio-oil feed, and
   (c) optionally means for further processing the at least substantially hydrotreated hydrocarbon product from the second reactor zone (bii).

Further, the invention shall be explained in more detail by the following Examples.

### Examples

### Example 1

For the production of a partially hydrotreated bio-oil intermediate, a bio-oil comprising depolymerized lignin was dried by rotary evaporation at 100 mbar at 30 °C for 30 min. The feedstock for a mild hydrotreatment was 50/50 volume ratio of ethyl acetate and bio-oil. This feedstock was water washed, filtered and homogenized prior hydrotreatment. Feedstock and hydrogen were passed through a fixed bed catalyst at 270 °C. The catalyst used for a mild hydrotreatment was a sulfided NiMo/alumina catalyst with a low content of active components. The reactor was also loaded with SiC powder to fill the voids. The reactor volume was 34 ml and reactor diameter was 12 mm.

The feedstock flow was set to 10 ml/h and the hydrogen flow was set to 10 NI/h at 160 bar. The gas to oil (GTO) ratio was 1000 I/I (STP conditions) and liquid hourly space velocity (Ihsv) was 0.5 hr⁻¹.

This mild hydrotreatment continued for more than 100 hr to collect 1 liter bio-oil intermediate.

This bio-oil intermediate was rotary evaporated at 100 mbar at 30 °C for 30 minutes to remove low boiling compounds prior a second hydrotreatment utilizing a sulfided NiMo/alumina catalyst with a high content of active components. The reactor was also loaded with SiC powder to fill the voids. The settings for this hydrotreatment were 10 ml/h feed flow and 15 NI/h hydrogen flow at 150 bar giving a GTO of 1500. The Ihsv was 0.5 hr⁻¹ and reactor temperature was 330 °C. This hydrotreatment was continued for 72 hr to collect the final product.

### Example 2

A mild hydrotreatment of bio-oil was performed as in Example 1 at a temperature of 120 °C. The products of Examples 1 and 2 were analyzed. FTIR and GC-MS data show hydrodeoxygenation of aldehydes and ketones present within the bio-oil. The efficiency of aldehyde and ketone removal increased with the increase of temperature from 120 to 270 °C.

## Claims

1. A process for producing a hydrocarbon product from a bio-oil comprising depolymerized lignin, comprising the steps of:
(a) providing a bio-oil comprising depolymerized lignin,
(b) passing a feed stream comprising the bio-oil from step (a) through a first reactor or first reactor zone in the presence of a gas, e.g. in the presence of a reducing gas such as H₂ and/or CO wherein the first reactor or first reactor zone comprises a guard bed comprising a first hydrotreatment catalyst and wherein the first reactor or first reactor zone is operated under conditions of elevated temperature and elevated pressure causing a partial hydrotreatment of the depolymerized lignin, wherein a partially hydrotreated bio-oil is obtained,
(c) passing a feed stream comprising a partially hydrotreated bio-oil from said first reactor or first reactor zone through a second reactor or second reactor zone in the presence of a gas, e.g. in the presence of a reducing gas such as H₂ and/or CO wherein the second reactor or second reactor zone comprises a catalyst bed comprising a second hydrotreatment catalyst and wherein the second reactor or second reactor zone is operated under conditions of elevated temperature and elevated pressure causing a hydrotreatment of the partially hydrotreated bio-oil feed, wherein an at least substantially hydrotreated hydrocarbon product is obtained and
(d) optionally further processing the at least substantially hydrotreated hydrocarbon product.

2. The process of claim 1,
wherein the bio-oil from step (a) comprises an amount of at least 10 wt-%, at least 30% wt-% or at least 50 wt-% depolymerized lignin.

3. The process of claim 1 or 2,
wherein the depolymerized lignin in the bio-oil provided in step (a) has a weight average molecular weight of about 200 to about 2,000 g/mol, particularly 250 to about 1,000 g/mol, more particularly of about 300 to about 800 g/mol, and/or
wherein the depolymerized lignin in the bio-oil provided in step (a) has an oxygen weight content of about 5 to about 35 wt-% based on the total weight of the depolymerized lignin.

4. The process of any one of the preceding claims,
wherein the bio-oil provided in step (a) further comprises
(i) an organic diluent, e.g. selected from ethyl acetate, glycerol, benzyl alcohol, cresol, terpineol including isomers thereof, or any combination thereof, particularly in an amount of up to about 20 wt-%, up to about 70 wt-%, or up to about 80 wt-% based on the total weight of the composition,
(ii) a rosin-containing oil such as tall oil, including crude tall oil, or a fraction thereof, particularly in an amount of up to about 20 wt-%, up to about 70 wt-%, up to about 80 wt-%, or up to about 99 wt-% based on the total weight of the composition, and/or
(iii)a depolymerized and partially hydrotreated lignin-oil, particularly in an amount of up to about 20 wt-%, up to about 70-wt% or up to about 80 wt-% based on the total weight of the composition.

5. The process of any one of the preceding claims,
wherein the depolymerized lignin in the partially hydrotreated bio-oil after step (b) is **characterized by** a reduced oxygen weight content compared to the oxygen weight content before step (b), wherein the reduction in the oxygen weight content is particularly from about 5% to about 50%, e.g. about 10% based on the relative oxygen weight content before step (b).

6. The process of any one of the preceding claims,
wherein the hydrocarbon product obtained in step (c) is **characterized by** an oxygen weight content of about 2 weight-% or less or about 1 weight-% or less and/or a sulfur weight content of about 10 to about 50 ppm or about 20 to about 30 ppm.

7. The process of any one of the preceding claims,
wherein the further processing in step (d) comprises a phase separation wherein the hydrocarbon product is separated into a gaseous phase, a liquid hydrocarbon product phase and an aqueous phase and optionally a fractionation.

8. The process of any one of the preceding claims,
wherein in step (b) the bio-oil feed is passed once through the first reactor or first reactor zone, or
wherein in step (b) the bio-oil feed is passed several times, e.g. 2, 3 or 4 times through a first reactor or first reactor zone, optionally at different conditions, e.g. at increasing temperature conditions.

9. The process of any one of the preceding claims,
wherein at least a portion of the partially hydrotreated bio-oil obtained from a passage through a first reactor or first reactor zone is recycled back to step (a) of the process, and/or
wherein at least a portion of the partially hydrotreated bio-oil obtained from a passage through a first reactor or first reactor zone according to step (b) is recycled back to a process for depolymerizing lignin.

10. A partially hydrotreated depolymerized lignin,
**characterized by** an oxygen weight content of about 5 to about 30 weight-% based on the total weight, obtainable after at least one passage through a first reactor or first reactor zone according to step (b) of claim 1.

11. A hydrocarbon product, obtainable by hydrotreatment of depolymerized lignin,
**characterized by** an oxygen weight content of about 2 wt-% or less and a sulfur weight content of about 10 to about 50 ppm, obtainable after a passage through at least a second reactor or second reactor zone according to step (c) of claim 1.

12. Use of a partially hydrotreated depolymerized lignin according to claim 10, as a capping agent, defoaming agent, diluent, solvent, e.g. extracting solvent, lubricant, viscosity reducing agent and/or compatibilizer in a process for depolymerizing lignin, e.g. in a process for separating bio-oil and black liquor constituents.

13. A unit for producing a hydrocarbon product comprising:
(a) optionally a container for providing a bio-oil comprising depolymerized lignin optionally including means for adding further components to the bio-oil,
(b) a first reactor comprising means for introducing a feed stream comprising a bio-oil comprising depolymerized lignin into the reactor, means for introducing a gas, particularly a reducing gas such as H₂ and/or CO into the reactor, a guard bed comprising a first hydrotreatment catalyst and means for removing a partially hydrotreated bio-oil from the reactor,
wherein the first reactor is adapted for operating under conditions of elevated temperature and elevated pressure causing a partial hydrotreatment of the depolymerized lignin,
(c) a second reactor comprising means for introducing a feed stream comprising a partially hydrotreated bio-oil into the reactor, means for introducing a gas, particularly a reducing gas such as H₂ and/or CO into the reactor, a catalyst bed comprising a second hydrotreatment catalyst and means for removing an at least substantially hydrotreated hydrocarbon product from the reactor, wherein the second reactor is adapted for operating under conditions of elevated temperature and elevated pressure causing a hydrotreatment of the partially hydrotreated bio-oil feed, and
(d) optionally means for further processing the at least substantially partially hydrotreated hydrocarbon product from the second reactor (c).

14. The unit of claim 13,
further comprising means for passing a feed stream comprising depolymerized lignin several times through a first reactor (b).

15. The unit of any one of claims 13 or 14,
further comprising means for recycling partially hydrotreated bio-oil from a first reactor (b) to container (a) and/or to a process for depolymerizing lignin.

16. A unit for producing a hydrocarbon product comprising:
(a) optionally a container for providing a bio-oil comprising depolymerized lignin optionally including means for adding further components to the bio-oil,
(b) a reactor comprising a first reactor zone (bi) and a second reactor zone (bii),
wherein the first reactor zone (bi) comprises means for introducing a feed stream comprising a bio-oil comprising depolymerized lignin into the first reactor zone, means for introducing a gas, e.g. a reducing gas such as H₂ and/or CO into the first reactor zone, a guard bed comprising a first hydrotreatment catalyst and means for removing a partially hydrotreated bio-oil from the first reactor zone (bi),
wherein the first reactor zone is adapted for operating under conditions of elevated temperature and elevated pressure causing a partial hydrotreatment of the depolymerized lignin,
wherein the second reactor zone (bii) comprises means for introducing a feed stream comprising a partially hydrotreated bio-oil into the second reactor zone, means for introducing a gas, e.g. a reducing gas such as H₂ and/or CO into the second reactor zone, a catalyst bed comprising a second hydrotreatment catalyst and means for removing an at least substantially hydrotreated hydrocarbon product from the second reactor zone,
wherein the second reactor zone is adapted for operating under conditions of elevated temperature and elevated pressure causing a substantially complete hydrotreatment of the partially hydrotreated bio-oil feed, and
(c) optionally means for further processing the at least substantially hydrotreated hydrocarbon product from the second reactor zone (bii).
